(19) Europäisches Patentamt
European Patent Office
Office européen des brevets

(11) Veröffentlichungsnummer: **0 025 089**
**B1**

(12) # EUROPÄISCHE PATENTSCHRIFT

(45) Veröffentlichungstag der Patentschrift: **02.06.82**

(51) Int. Cl.³: **C 09 D 3/66,** C 08 L 67/02

(21) Anmeldenummer: **80103435.6**

(22) Anmeldetag: **20.06.80**

(54) **Wärmehärtbares Überzugsmittel auf Basis von Polyestern.**

(30) Priorität: **25.08.79 DE 2934443**

(43) Veröffentlichungstag der Anmeldung:
**18.03.81 Patentblatt 81/11**

(45) Bekanntmachung des Hinweises auf die Patenterteilung:
**02.06.82 Patentblatt 82/22**

(84) Benannte Vertragsstaaten:
**DE FR GB IT NL**

(56) Entgegenhaltungen:
**DE A 1 495 667**

(73) Patentinhaber: **CHEMISCHE WERKE HÜLS AG,
Postfach 1320, D-4370 Marl 1 (DE)**

(72) Erfinder: **Burzin, Klaus, Dr., Wellerfeldweg 164,
D-4370 Marl (DE)**
Erfinder: **Rüter, Jörn, Dr., Dormagener Strasse 42,
D-4370 Marl (DE)**
Erfinder: **Haneklaus, Karl-Heinz, Röntgenstrasse 16,
D-4370 Marl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 025 089 B1

## Wärmehärtbare Überzugsmittel auf Basis von Polyestern

Gegenstand der Erfindung sind wärmehärtbare Überzugsmittel auf der Grundlage einer Mischung aus Bindemittel, organischem Lösemittel sowie ggf. Pigmenten, Füllstoffen und weiter üblichen Hilfs- und Zusatzstoffen, die als Bindemittel

A. 5 bis 25 Gewichtsprozent Aminoplaste und

B. 75 bis 95 Gewichtsprozent hydroxylgruppenhaltige, gesättigte lineare Polyester aus aliphatischen Diolen mit 2 bis 12 C-Atomen in der Kohlenstoffkette, cycloaliphatischen Diolen und 2.2-Dimethylpropandiol-(1.3) einerseits und aromatischen sowie ggf. aliphatischen und cycloaliphatischen Dicarbonsäuren andererseits enthalten, wobei die Polyester eine Viskositätszahl im Bereich von 40 bis 80 $cm^3/g$ und einen Glasumwandlungspunkt $>50°C$ besitzen.

Lösungsmittelhaltige Überzugsmittel, welche als Bindemittel ein Gemisch aus Aminoplasten und hochmolekularen, linearen Polyestern enthalten, sind bekannt. So werden in der DE-B 1 807 776 Bindemittel beschrieben, die neben Benzoguanaminharzen Polyester aus Terephthal- und Isophthalsäure sowie gegebenenfalls aliphatischen Dicarbonsäuren einerseits und linearen, aliphatischen Diolen und 2.2-Dimethylpropandiol-(1.3) andererseits enthalten. Nach eigenen Angaben der Anmelderin (DE-A 2 126 048) können nur Überzüge mit dünnen Schichtdicken hergestellt werden. Bei höheren Schichtdicken, wie sie üblicherweise verwendet werden, treten bei einer Verformung Risse in der Filmschicht auf.

Aus diesem Grunde wurden die genannten Produkte abgeändert, so daß nur noch solche Polyester eingesetzt werden sollen, die einen Glasumwandlungspunkt im Bereich zwischen 30°C und 50°C besitzen (DE-A 2 126 048). Auch diese modifizierten Überzugsmittel weisen bei höheren Schichtdicken immer noch eine nicht ausreichende Flexibilität bzw. eine nicht hinreichende Korrosionsschutzwirkung auf.

DE-A 2 211 059 beschreibt Überzugsmittel, bestehend aus linearen Polyestern, die im speziellen den Neopentylglykolester der Hydroxypivalinsäure enthalten. Die genannten linearen Polyester können ggf. in Verbindung mit Aminoplasten eingebrannt werden. Die beschriebenen Überzugsmittel weisen wohl hinlänglich gute Flexibilitäten auf, jedoch lassen sie in der Oberflächenhärte bzw. in der Korrosionsschutzwirkung zu wünschen übrig.

Die DE-C 2 521 792 beschreibt Überzugsmittel, die neben Aminoplasten Polyester aus aliphatischen Diolen und 2.2-Dimethylpropandiol-(1.3) einerseits und Tere- bzw. Isophthalsäure und Hexahydroterephthalsäure andererseits enthalten. Filme aus diesen Überzugsmitteln weisen eine gute Flexibilität bei gleichzeitig hoher Oberflächenhärte und eine gute Korrosionsschutzwirkung auf.

In der DE-C 2 521 791 schließlich werden Überzugsmittel beschrieben, die neben Aminoplasten Polyester aus aliphatischen Diolen, 2.2-Dimethyl-propandiol-(1.3) und 1.4-Hydroxymethylcyclohexan einerseits und Tere- bzw. Isophthalsäure andererseits enthalten. Diese Überzugsmittel liefern nach dem Einbrennen Filme mit besonders hoher Flexibilität bei gleichzeitig hoher Oberflächenhärte und mit besonders guter Korrosionsschutzwirkung.

Allen diese beschriebenen Überzugsmitteln ist gemeinsam, daß die damit hergestellten Filme nach dem Einbrennen bei Temperaturen um 100°C noch blocken, so daß frisch eingebrannte Überzüge zuerst auf Temperaturen deutlich unter 100°C abgekühlt werden müssen, ehe damit lackierte Gegenstände aufeinander gestapelt werden können. Die Blockfestigkeit von eingebrannten Lackfilmen wird als die Temperatur definiert, bei der dieser Effekt des »Aufeinanderklebens« von lackierten Teilen gerade noch nicht auftritt.

Aufgabe der vorliegenden Erfindung war es, Überzugsmittel herzustellen, die nach dem Einbrennen Filme mit hoher Blockfestigkeit bei gleichzeitig hoher Flexibilität, sowie Oberflächenhärte und besonders guter Korrosionsschutzwirkung ergeben.

Die Aufgabe konnte dadurch gelöst werden, daß Überzugsmittel eingesetzt wurden, die neben Aminoplasten hydroxylgruppenhaltige, gesättigte lineare Polyester enthalten, deren Diolanteil zu 5 bis 50, vorzugsweise 10 bis 30 Molprozent, aus einem Diol der allgemeinen Formel I

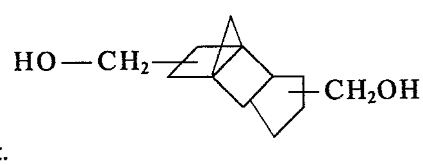

I

besteht.

Neben dem erfindungsgemäßen Diol enthalten die erfindungsgemäß eingesetzten linearen Polyester in der Alkoholkomponente aliphatische Diole mit 2 bis 12 Kohlenstoffatomen, wie z. B. Ethylenglykol, Propandiol-(1.3), Butandiol-(1.4), Hexandiol-(1.6), Dodecandiol-(1.12). Die aliphatischen Diole sind zu 20 bis 40 Molprozent, vorzugsweise zu 25 bis 35 Molprozent, in der Alkoholkomponente enthalten, wobei wiederum 0 bis 35 Molprozent, bezogen auf die Alkoholkomponente, durch weitere cycloaliphatische Diole, wie beispielsweise 1.4-Bis-hydroxymethyl-cyclohexan, ersetzt sein können.

Daneben enthalten die erfindungsgemäß eingesetzten Polyester 2.2-Dimethyl-propandiol-(1.3). Dieses Diol ist zu 30 bis 70 Molprozent, vorzugsweise 50 bis 60 Molprozent, in der Diolkomponente enthalten.

Die erfindungsgemäßen Polyester enthalten in dem Dicarbonsäureanteil 40 bis 60 Molprozent Terephthalsäure und 40 bis 60 Molprozent Isophthalsäure. Vorzugsweise werden die Dicarbonsäuren zu etwa gleichen Anteilen eingesetzt. Daneben kann der Dicarbonsäureanteil noch bis zu 30 Molprozent, vorzugsweise bis zu 15 Molprozent, einer aliphatischen oder cycloaliphatischen Dicarbonsäure, wie z. B. Adipinsäure, Azelainsäure, Sebazinsäure, Dodecandisäure oder Hexahydroterephthalsäure enthalten.

Die Polyester werden nach bekannten Verfahren hergestellt (W. R. Sorenson, T. W. Campbell, Preparative Methods of Polymer Chemistry, Interscience Publishers, Inc., New York, 1961, Seiten 111 bis 127; H. Ludewig, Polyester-Fasern, Chemie und Technologie — Akademie-Verlag Berlin, 1975, Seiten 95 ff.).

Die Polyester besitzen eine Viskositätszahl von 40 bis 80 $cm^3/g$. Bevorzugt werden Polyester mit einer Viskositätszahl im Bereich von 50 bis 70 $cm^3/g$.

Die Eigenschaften der aus den erfindungsgemäß zu verwendenden Copolyestern hergestellten Lacküberzüge werden sowohl durch das Molekulargewicht als auch durch die Zusammensetzung der Copolyester bestimmt. Verwendet man Copolyester mit niedrigen Viskositätszahlen, so besitzen die Überzüge in der Regel eine hohe Härte, jedoch keine ausreichende Flexibilität. Verwendet man Polyester mit höheren Viskositätszahlen, so wird die Flexibilität wesentlich verbessert. Allerdings wird infolge der dadurch bedingten Verminderung der Löslichkeit der Copolyester eine Grenze nach oben gesetzt.

Die in den Polyestern enthaltene Terephthalsäure sollte etwa die Hälfte des aromatischen Dicarbonsäureanteils ausmachen. Eine übermäßige Erhöhung des Terephthalsäureanteils bedingt meist eine Verminderung der Löslichkeit in den üblichen Lacklösemitteln. Dagegen führt eine Erhöhung des Isophthalsäure- bzw. zum Beispiel des Hexahydroterephthalsäureanteils zu einer Verbesserung der Löslichkeit; allerdings ist dies mit einer Erniedrigung des Erweichungsbereiches verbunden.

Zur Gewährleistung einer zufriedenstellenden Löslichkeit sollte der Diolanteil mindestens 30 Molprozent 2.2-Dimethylpropandiol-(1.3) enthalten. Ist dagegen der Anteil an diesem Diol zu hoch, so besitzen die daraus hergestellten Überzüge keine befriedigende Oberflächenhärte.

Als geeignete Aminoplaste kommen die bekannten Umsetzungsprodukte von Aldehyden, insbesondere Formaldehyd, mit z. B. Melamin, Benzoguanamin oder auch Amiden, wie Dicyandiamid oder Harnstoff, in Frage. Geeignet sind ferner Gemische aus derartigen Produkten. Bevorzugt eingesetzt werden die Aminoplaste auf Basis von Melamin oder Benzoguanamin. Besonders geeignet sind die mit Alkohol vollständig oder partiell veretherten Aminoplaste. Während bei Melaminformaldehydharzen als Veretherungskomponente Methanol bevorzugt wird, können Benzoguanaminformaldehydharze auch vorteilhaft in ihrer butyl- oder isobutyl-veretherten Form angewendet werden. Für den erfindungsgemäßen Verwendungszweck steht eine Vielzahl handelsüblicher Aminoplaste zur Verfügung.

Zur Herstellung der Überzugsmittel werden zunächst Lösungen des Polyesters und des Aminoplasten miteinander vermischt. Das Gewichtsverhältnis von Polyester zu Aminoplast kann zwischen 95 : 5 bis 75 : 25, vorzugsweise zwischen 90 : 10 bis 80 : 20, schwanken. Das für den jeweiligen Verwendungszweck der Überzungsmittel optimale Verhältnis der beiden Komponenten zueinander läßt sich durch Vorversuche leicht ermitteln.

Dabei ist zu berücksichtigen, daß häufig durch Erhöhung des Aminoplastanteils sich die Härte der Überzüge erhöht und ihre Elastizität sich vermindert, während bei Erniedrigung des Aminoplastanteils die Härte nachläßt und die Flexibilität zunimmt.

Die erfindungsgemäßen Überzugsmittel werden in üblichen Lacklösungsmitteln verarbeitet. Als solche kommen beispielsweise Methylacetat, Ethylacetat, Acetessigester, Butylacetat, Ethylglykol, Ethylglykolacetat, Butylglykol, Methylethylketon, Methylisobutylketon, Cyclohexanon, 2-Nitropropan, Isophoron, Dioxan, Dimethylformamid, Methylglykolacetat, Ethylglykolacetat, Benzoesäuremethylester, Trichlorethylen oder andere Halogenkohlenwasserstoffe oder Gemische davon in Frage. Ferner können auch aromatische Lösungsmittel, wie beispielsweise Xylol, Toluol, Benzol und SOLVESSO® bzw. höhersiedende Aromatenschnitte oder aber aliphatische Kohlenwasserstoffgemische, wie z. B. Lackbenzin, verwendet werden. Der Anteil des Lösungsmittels im gesamten Überzugsmittel beträgt 50 bis 75 Gewichtsprozent.

Zur Aushärtung werden den erfindungsgemäßen Überzugsmitteln saure Katalysatoren zugefügt. Hierfür eignen sich Mineralsäuren, wie Salzsäure, Schwefelsäure und Phosphorsäure oder organische Säuren, wie Oxalsäure, Benzolsulfonsäure, Toluolsulfonsäure; aber auch deren Veresterungsprodukte mit Methanol, Ethanol, Propanol, Ethylenglykol und Propylenglykol sowie Addukte aus Sulfonsäure und Epoxidverbindung kommen in Frage. Weiterhin können auch Toluolsulfonsäuresalze mit bei höheren Temperaturen flüchtigen Basen, wie beispielsweise Ammoniak, Mono-, Di- und Trialkylaminen, Morpholin, Dimethylformamid, Dimethylacetamid, N-Methylpyrrolidon u. ä. eingesetzt werden. Die Katalysatoren sind in Mengen von 0,5 bis 3 Gewichtsprozent, vorzugsweise von 0,5

bis 1,0 Gewichtsprozent, — bezogen auf den Aminoplasten — im Überzugsmittel enthalten.

Ferner können die Überzugsmittel noch Pigmente und Füllstoffe, wie beispielsweise Titandioxid, Kreide, Kieselsäure, Magnesiumoxid oder Farbpigmente enthalten. Daneben können übliche Zusatz- und Hilfsstoffe, wie beispielsweise Verlaufmittel oder Thixotropiermittel, eingesetzt werden.

Die Überzugsmittel werden nach bekannten Verfahren, beispielsweise durch Streichen, Spritzen, Tauchen oder Walzen aufgetragen und bei Temperaturen zwischen 100 und 350°C eingebrannt. Die erhaltenen Überzüge zeichnen sich — selbst bei großer Schichtdicke — durch hohe Elastizität in Verbindung mit guter Oberflächenhärte aus. Ferner besitzen sie ein ausgezeichnetes Witterungsverhalten und eine ausgezeichnete Korrosionsschutzwirkung. Gleichzeitig besitzen die Überzüge eine Blockfestigkeit, die weit über 100°C liegt.

## Beispiele

Die in den Beispielen aufgeführten Meßergebnisse werden mit Hilfe nachstehender Methoden ermittelt:

| | |
|---|---|
| Viskositätszahl: | $\frac{\eta_{rel-1}}{c} \quad c = \left[\frac{g}{cm^3}\right]$ |
| | wobei $\eta_{rel}$ = die relative Lösungsviskosität einer Lösung des Polyesters bei 25°C in Phenol/Tetrachlorethan (Gewichtsverhältnis 3 : 2) ist c = 0,023 [g/cm³] |
| T-Bend-Test: | ECCA-Norm |
| Weatherometertest: | 6000 W Xenon-Lampe, Cyclus 17/3 Beendigung der Prüfung bei einem Glanzverlust von 10% |
| Kesternich-Test: | DIN 50 017 |
| Salzsprüh-Test: | ASTM-B-117-64 (abgebrochen bei einer Unterrostungsbreite von 2 mm) |
| Pendelhärte: | DIN 53 157 (nach König) |
| Gitterschnitt: | DIN 53 151 |
| Näpfchentest: | nach Erichsen |
| Blockfestigkeit: | 2 mit dem Bindemittel lackierte und eingebrannte Bleche werden so aufeinander gelegt, daß die Filme sich berühren. Die Bleche werden mit einem 10-kg-Gewicht beschwert und 24 Stunden bei erhöhter Temperatur getempert. Danach wird geprüft, ob die Bleche aneinanderkleben oder nicht. Die Blockfestigkeit wird als die Temperatur angegeben, bei der die Bleche gerade noch nicht aneinanderkleben. |

## Beispiel 1

85 Gewichtsteile eines Copolyesters, der aus den Resten der Terephthalsäure, Isophthalsäure sowie des Ethylenglykols, 2.2-Dimethylpropandiols-(1.3), 1.4-Dihydroxymethylcyclohexans und des erfindungsgemäßen Diols im Molverhältnis 50 : 50/6 : 46 : 24 : 24 Molprozent aufgebaut ist (Viskositätszahl: 58 cm³/g), wurden in 128 Gewichtsteilen Xylol gelöst. Die Lösung wurde mit 15 Gewichtsteilen eines handelsüblichen Hexamethoxymethylmelaminharzes (MAPRENAL® MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf ein 0,8 mm starkes Stahlblech aufgebracht und bei 210°C 10 Minuten lang eingebrannt (Schichtdicke: 30 bis 35 µ).

## Beispiel 2

80 Gewichtsteile des in Beispiel 1 beschriebenen Copolyesters werden in 186,6 Gewichtsteilen Ethylglykolacetat gelöst. Zu dieser Lösung wurden anstelle des Hexamethoxymethylmelaminharzes 32,3 Gewichtsteile einer 62%igen Benzoguanaminharzlösung (MAPRENAL® MF 980) in Butanol zugegeben (1 Mol Benzoguanamin wurde mit 3,7 Mol Formaldehyd und 1,5 Mol Butanol kondensiert). Zusammen mit 125 Gewichtsteilen $TiO_2$-Pigment wurde diese Mischung auf dem Walzenstuhl abgerieben und mit 4 Gewichtsteilen einer 5%igen Lösung des Morpholinsalzes der p-Toluolsulfonsäure in Benzylalkohol versetzt. Dieses Überzugsmittel wurde, wie in Beispiel 1 beschrieben, aufgetragen und eingebrannt.

Beispiel 3

85 Gewichtsteile eines Copolyesters, der aus den Resten der Terephthalsäure, Isophthalsäure, Hexahydroterephthalsäure sowie des Ethylenglykols, 2.2-Dimethylpropandiols-(1.3) und des erfindungsgemäßen Diols im Molverhältnis 50 : 40 : 10/26 : 46 : 28 aufgebaut ist (Viskositätszahl: 59 $cm^3/g$), wurde in 198 Gewichtsteilen eines Lösungsmittelgemisches (aus Xylol/Butylacetat/Solvesso 100 und Ethylglykolacetat = 30/30/20/20 Gewichtsprozent) gelöst. Diese Lösung wurde mit 15 Gewichtsteilen eines handelsüblichen Hexamethoxymethylmelaminharzes (MAPRENAL® MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf 0,8 mm starkes Stahlblech aufgebracht und bei 210° C 10 Minuten lang eingebrannt (Schichtdicke 30 bis 35 µ)

Beispiel 4

80 Gewichtsteile des in Beispiel 1 beschriebenen Copolyesters werden in 186,6 Gewichtsteilen Ethylglykolacetat gelöst. Zu dieser Lösung wurden anstelle des Hexamethoxymethylmelaminharzes 32,3 Gewichtsteile der in Beispiel 2 genannten Benzoguanaminharzlösung zugegeben. Zusammen mit 125 Gewichtsteilen $TiO_2$-Pigment wurde diese Mischung auf dem Walzenstuhl abgerieben und mit 4 Gewichtsteilen einer 5%igen Lösung des Morpholinsalzes der p-Toluolsulfonsäure in Benzylalkohol versetzt. Dieses Überzugsmittel wurde, wie in Beispiel 3 beschrieben, aufgetragen und eingebrannt.

Beispiel A
(DE-C 2 521 791, Beispiel 1)

85 Gewichtsteile eines Copolyesters, der aus den Resten der Terephthalsäure, Isophthalsäure sowie des 2.2-Dimethylpropandiols-(1.3), des 1.4-Bis-hydroxymethyl-cyclohexans und des Ethylenglykols im Molverhältnis 50 : 50/60 : 30 : 10 Molprozent aufgebaut ist (Viskositätszahl: 62 $cm^3/g$), wurde in 128 Gewichtsteilen Xylol gelöst. Diese Lösung wurde mit 15 Gewichtsteilen eines handelsüblichen Hexamethoxamethylmelaminharzes (MAPRENAL® MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der p-Toluolsulfonsäure in Benzylalkohol zugefügt. Das Überzugsmittel wurde auf 0,8 mm starkes Stahlblech aufgebracht und bei 190° C 10 Minuten lang eingebrannt (Schichtdicke 30 bis 35 µ).

Beispiel B
(DE-C 2 521 792, Beispiel 1)

85 Gewichtsteile eines Copolyesters, der aus den Resten der Terephthalsäure, Isophthalsäure, Hexahydroterephthalsäure sowie des Ethylenglykols und 2.2-Dimethylpropandiols-(1.3) im Molverhältnis 50 : 40 : 10/44 : 56 Molprozent aufgebaut ist (Viskositätszahl: 61 $cm^3/g$), wurde in 198 Gewichtsteile eines Lösungsmittelgemisches (aus Xylol, Butylacetat, SOLVESSO 100 und Ethylglykolacetat = 30/30/20/20 Gewichtsprozent) gelöst. Diese Lösung wurde mit 15 Gewichtsteilen eines handelsüblichen Hexamethoxymethylmelaminharzes (MAPRENAL® MF 900) versetzt und zusammen mit 125 Gewichtsteilen $TiO_2$-Pigment auf einem Walzenstuhl abgerieben. Als Katalysator wurden 4 Gewichtsteile einer 5%igen Lösung des Morpholinsalzes der Toluolsulfonsäure in Benzylalkohol zugefügt. Das Überzugsmittel wurde auf 0,8 mm starkes Stahlblech aufgebracht und bei 210° C 10 Minuten lang eingebrannt (Schichtdicke 30 bis 35 µ).

Tabelle

| | Beispiel | | | | | |
|---|---|---|---|---|---|---|
| | 1 | 2 | 3 | 4 | A | B |
| T-Bend-Test | TO | TO | TO | TO | TO | TO |
| Weatherometer [h] | 1200 | 1200 | 1100 | 1100 | 1200 | 1100 |
| Kesternichtest [Runden] | >20 | >20 | 20 | 19 | >20 | 19 |
| Salzsprühtest [h] (2 mm Unterrostung) | 1000 | 1000 | 1000 | 1000 | 1000 | 1000 |
| Pendelhärte [sec] | 182 | 180 | 184 | 186 | 170 | 180–190 |
| Gitterschnitt (8 mm Tiefung) | GT 0–1 | GT 0–1 | GT 0–1 | GT 0–1 | GT 0–1 | GT 0–1 |
| Näpfchentest | in Ordnung | in Ordnung | in Ordnung | in Ordnung | in Ordnung | in Ordnung |
| Blockfestigkeit [°C] | 120 | 120 | 115 | 115 | 100 | 95 |

Viskositätszahl = $\frac{n_{rel}-1}{c}$ [illegible] $\frac{g}{cm^3}$,

wobei $n_{rel}$ = die relative Lösungsviskosität einer Lösung des Polyesters bei 25°C in Phenol/Tetrachlorethan (Gewichtsverhältnis 3 : 2) ist

c = 0.023 [g/cm³].

**Patentansprüche**

1. Wärmehärtbares Überzugsmittel auf der Grundlage einer Mischung aus Bindemittel, organischem Lösungsmittel sowie ggf. Pigmenten, Füllstoffen und weiter üblichen Hilfs- und Zusatzstoffen, das als Bindemittel

A. 5 bis 25 Gewichtsprozent Aminoplaste und
B. 75 bis 95 Gewichtsprozent hydroxylgruppenhaltige, gesättigte lineare Polyester aus aliphatischen Diolen mit 2 bis 12 C-Atomen in der Kohlenstoffkette, 2.2-Dimethylpropandiol-(1.3) und ggf. cycloaliphatischen Diolen einerseits und aromatischen sowie ggf. aliphatischen und cycloaliphatischen Dicarbonsäuren andererseits enthält, wobei die Polyester eine Viskositätszahl im Bereich von 40 bis 80 cm³/g und einen Glasumwandlungspunkt >50° C besitzen,

dadurch gekennzeichnet, daß der Diolanteil zu 5 bis 50 Molprozent aus einem Diol der allgemeinen Formel I

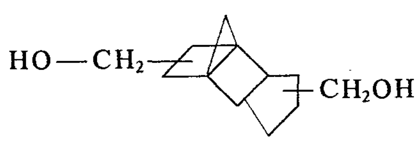

I

besteht.

2. Überzugsmittel nach Anspruch 1, dadurch gekennzeichnet, daß die Komponente B. in ihrem Diolanteil zu 10 bis 30 Molprozent aus dem Diol der allgemeinen Formel I besteht.

**Claims**

1. A heat-curable coating composition based on a mixture of a binder, an organic solvent and optionally a pigment, a filler and one or more other conventional assistants and additives, the binder comprising

A) 5 to 25 per cent by weight of an aminoplast, and
B) 75 to 95 per cent by weight of a hydroxyl-containing saturated linear polyester of an aliphatic diol of 2 to 12 carbon atoms, 2,2-dimethylpropane-1,3-diol and optionally a cycloaliphatic diol on the

one hand and an aromatic dicarboxylic acid and optionally an aliphatic dicarboxylic acid and/or a cycloaliphatic dicarboxylic acid on the other hand, the polyester having a viscosity number in the range from 40 to 80 $cm^3/g$ and a glass transition temperature above 50° C,

characterised in that the diol moiety consists to the extent of 5 to 50 mol per cent of a diol of the general formula I

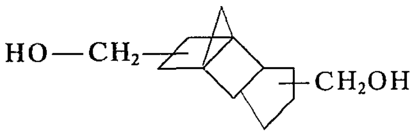

I

2. A coating composition according to claim 1, characterised in that component B consists to the extent of 10 to 30 mol percent of its diol moiety of a diol of the general Formula I.

## Revendications

1. Agent de revêtement thermodurcissable à base d'un mélange de liant, de solvant organique et éventuellement de pigments, de charges et d'autres adjuvants et additifs usuels, qui contient comme liant

A. de 5 à 25% en poids d'aminoplastes et
B. de 75 à 95% en poids de polyesters linéaires saturés hydroxylés tirés, d'une part, de diols aliphatiques contenant de 2 à 12 atomes de carbone dans la chaîne carbonée, de 2,2-diméthylpropane-diol-(1,3) et éventuellement de diols cycloaliphatiques et, d'autre part, d'acides dicarboxyliques aromatiques et éventuellement aliphatiques et cyclo-aliphatiques, les polyesters ayant un indice de viscosité compris entre 40 et 80 $cm^3/g$ et un point de transition vitreuse supérieur à 50° C, ledit agent de revêtement étant caractérisé par le fait que la fraction de diol se compose, pour 5 à 50 mol%, d'un diol de la formule générale

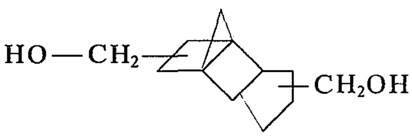

I

2. Agent de revêtement selon la revendication 1, caractérisé par le fait que le constituant B comprend, dans sa fraction de diol, de 10 à 30 mol% du diol répondant à la formule générale (I).